# EUROPEAN PATENT APPLICATION

(11) **EP 1 489 530 A1**
(43) Date of publication of application: **22.12.2004**
(21) Application number: 04253591.4
(22) Date of filing: 16.06.2004
(51) Int. Cl.: G06F 17/30, G05B 19/418

(54) **Inspection method using a database to manage inspection parameters of techniques**

(30) Priority: 17.06.2003 US 465837
(71) Applicant: GENERAL ELECTRIC COMPANY, Schenectady, NY 12345 (US)
(72) Inventor: Hopple, Michael Robert, Scotia, NY 12302-4609 (US)
(74) Representative: Goode, Ian Roy

(57) **Abstract**

An inspection method includes accessing a database (10). The database includes at least one technique (20), and the technique has a number of inspection parameter values (22). The inspection method includes selecting one of the techniques, formatting the technique into a variable list (30) readable by an inspection system (40), and outputting the variable list to an instruction file (50) accessible by the inspection system.

## Description

The invention relates generally to management of inspection parameters and, more particularly, to management of inspection parameters for industrial nondestructive testing.

There are many inspection parameters that need to be controlled in order to successfully perform an industrial nondestructive evaluation. For example, for a digital radiographic inspection, these inspection parameters include x-ray conditions, detector geometry, general set-up parameters, and data file names. Conventionally, text files are used to maintain the inspection parameters. Moreover, such systems typically only maintain the most recently used set of inspection parameter values. In addition, conventional systems have no utility to manage the text files.

However, because of the large number of inspection parameters required for industrial nondestructive testing, such as digital radiography, it would be desirable to maintain the inspection parameters for later review or modification. In addition, it would be desirable to maintain the inspection parameters, so that they may accompany the resulting inspection data, in order to document how the inspection was performed. In addition, it would be desirable to maintain the inspection parameters, in order to reproduce the inspection or to modify the inspection for another use.

Briefly, in accordance with one embodiment of the present invention, an inspection method is described. The inspection method includes accessing a database. The database includes at least one technique, and the technique has a number of inspection parameter values. The inspection method further includes selecting one of the techniques, formatting the technique into a variable list readable by an inspection system, and outputting the variable list to an instruction file accessible by the inspection system.

A digital radiography inspection method embodiment of the invention includes accessing a database, selecting one of the techniques, error checking the technique, formatting the technique into a variable list readable by a digital radiography inspection system, and outputting the variable list to an instruction file accessible by the digital radiography inspection system.

A computer-readable medium embodiment of the invention is also described. The computer-readable medium is configured for storing and/or transmitting instructions that, when executed by a computer, perform a method for outputting a variable list to an instruction file accessible by an inspection system. The method includes accessing a database, selecting one of the techniques, error checking the technique, formatting the technique into the variable list readable by the inspection system, and outputting the variable list to the instruction file accessible by the inspection system.

These and other features, aspects, and advantages of the present invention will become better understood when the following detailed description is read with reference to the accompanying drawings in which like characters represent like parts throughout the drawings, wherein:
FIG. 1 illustrates an inspection method embodiment of the invention;
FIG. 2 shows an exemplary user screen for technique selection;
FIG. 3 shows an exemplary user screen for part identification entry;
FIG. 4 shows a first tab of an exemplary user screen for setting up a technique for a digital radiographic inspection;
FIG. 5 shows a second tab of the exemplary user screen for setting up the technique for the digital radiographic inspection;
FIG. 6 shows a third tab of the exemplary user screen for setting up the technique for the digital radiographic inspection;
FIG. 7 shows a fourth tab of the exemplary user screen for setting up the technique for the digital radiographic inspection;
FIG. 8 is an exemplary user screen for a database clean-up utility wizard;
FIG. 9 illustrates a computer-readable medium embodiment of the invention; and
FIG. 10 is a conceptual diagram of a configuration.

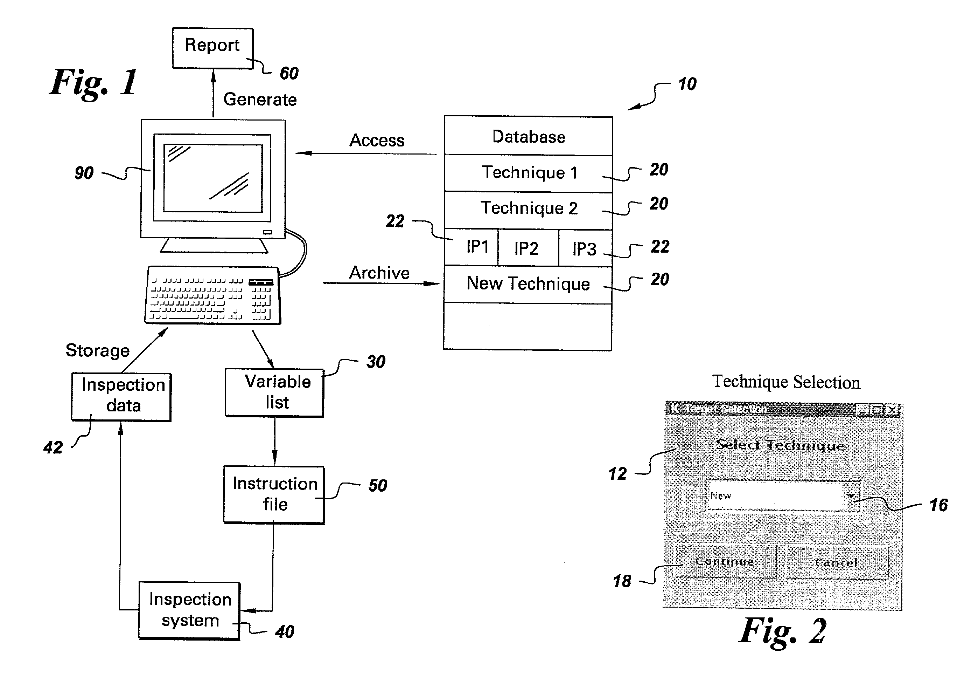

An inspection method embodiment of the invention is described with reference to FIG. 1. The inspection method includes accessing a database 10. As indicated in FIG. 1, the database 10 includes at least one technique 20. The technique 20, in turn, includes a number of inspection parameter values 22. The inspection parameter values 22 are abbreviated as "IP" in FIG. 1. The inspection method further includes selecting one of the techniques 20. By "select," it is meant that the user chooses either an existing or new technique 20. The technique 20 is formatted into a variable list 30 readable by an inspection system 40. The variable list 30 is output to an instruction file 50 accessible by the inspection system 40.

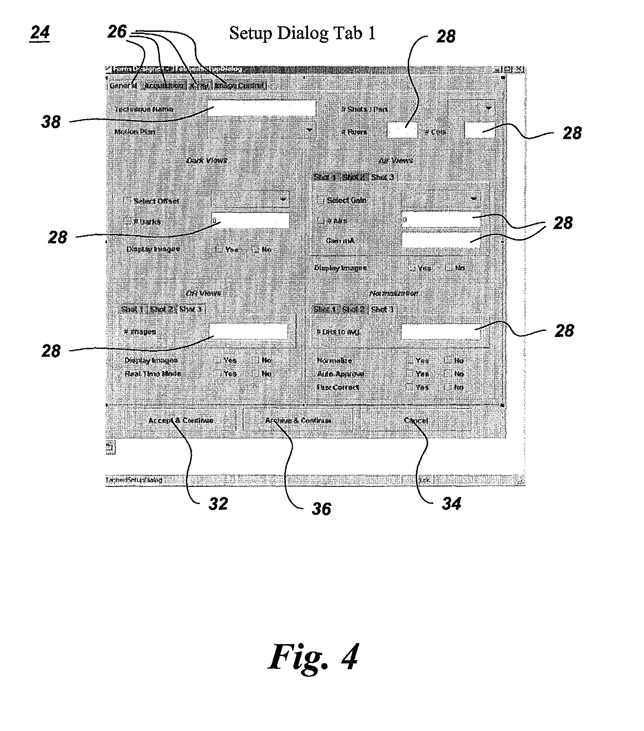

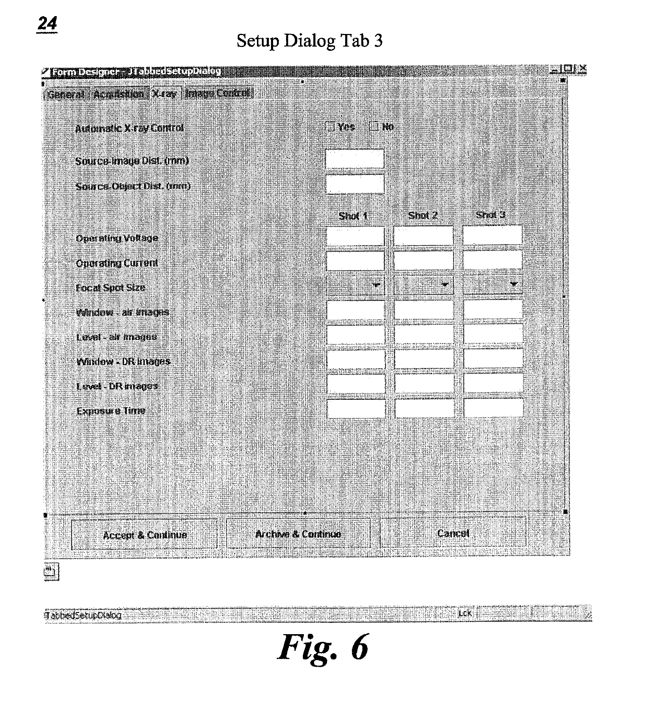

A "technique" is a set of parameters, with specific values specified for each of the parameters. For radiography, exemplary inspection parameters 22 include the operating voltage, operating current, focal spot size, exposure time, and data file names, as indicated for example in FIGS. 4 and 6. It should be noted that although the examples described herein pertain to radiography, the inspection method is applicable to other evaluation techniques as well, for example eddy current, infrared thermography, and ultrasound.

As indicated in FIG. 1, the database 10 may be accessed using a computer 90. The database 10 may be stored on the computer 90 or on a server (not shown). The server may be situated locally or remotely and may be accessed through a local network or via the internet or other means. For one example, the database 10 is created using Postgres running on the Linux operating system, and the software to access the database is written in Java. Beneficially, storing and accessing technique through database 10, instead of the conventional practice of using text files to maintain inspection parameters, provides both database access functionality and data integrity reassurance not provided by text files.

It should be noted that the present invention is not limited to any particular computer for performing the processing tasks of the invention. The term "computer," as that term is used herein, is intended to denote any machine capable of performing the calculations, or computations, necessary to perform the tasks of the invention. The term "computer" is intended to denote any machine that is capable of accepting a structured input and of processing the input in accordance with prescribed rules to produce an output.

The inspection system 40, for example a digital radiography system 40, is adapted to access the instruction file 50. The inspection system 40 is operated using the variable list 30 to generate a set of inspection data 42. In other words, the inspection system is operated using the inspection parameter values 22 specified in the technique 20. The inspection data 42 may be stored in the computer 90 or in a database on a server (not shown) and may also be printed or processed. For storage, the inspection data 42 may be referenced via the technique name and part identifier (or part number) and stored using a file tree structure on the inspection system storage media. The present invention is related to commonly assigned, pending US Patent Application, Clifford Bueno et al., "Method, System and Apparatus for Processing Radiographic Images of Scanned Objects", filed June 5, 2003. The storage details are described in greater detail therein.

According to another embodiment, the inspection method further includes generating a report 60 of the inspection parameter values 22 for the technique 20. The report 60 may be generated by the computer 90 in digital or hard copy (for example, paper) form and may be separate from or attached to the associated inspection data 42 to serve as a record as how the inspection was performed.

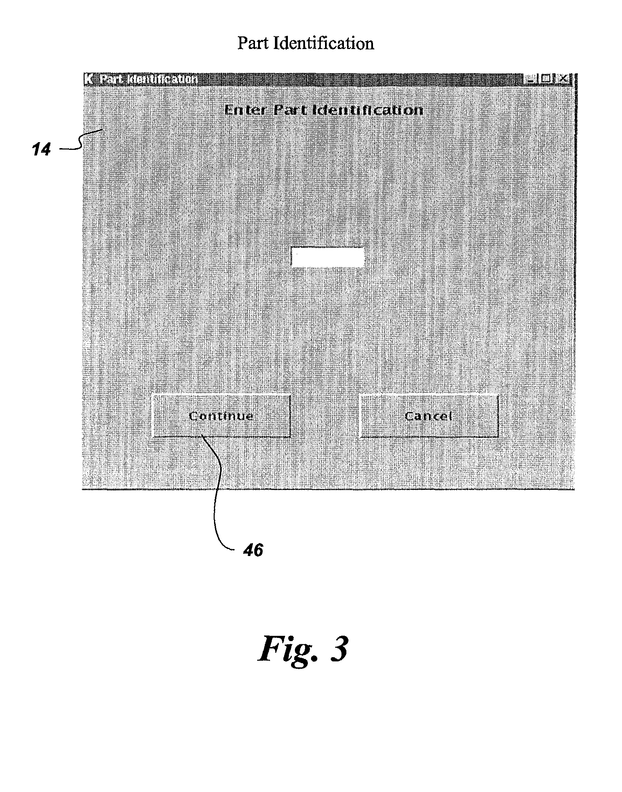

Exemplary user screens 12, 14 are shown in FIGS. 2 and 3, respectively. Using the exemplary part identification screen 14 of FIG. 3, the operator may enter the part identifier for the part (not shown) to be inspected. This can be accomplished, for example, by typing a part identifier number or by scanning a part identifier number using a bar code reader (not shown). FIG. 2 shows an exemplary user screen 12 for technique 20 selection. Clicking on the menu arrow 16 presents an operator with a list of known techniques 20 from the database 10 as well as the opportunity to select a new technique 20, as indicated. According to a particular embodiment, the last technique 20 previously selected is initially presented to the operator, although any technique 20, new or existing, may be selected.

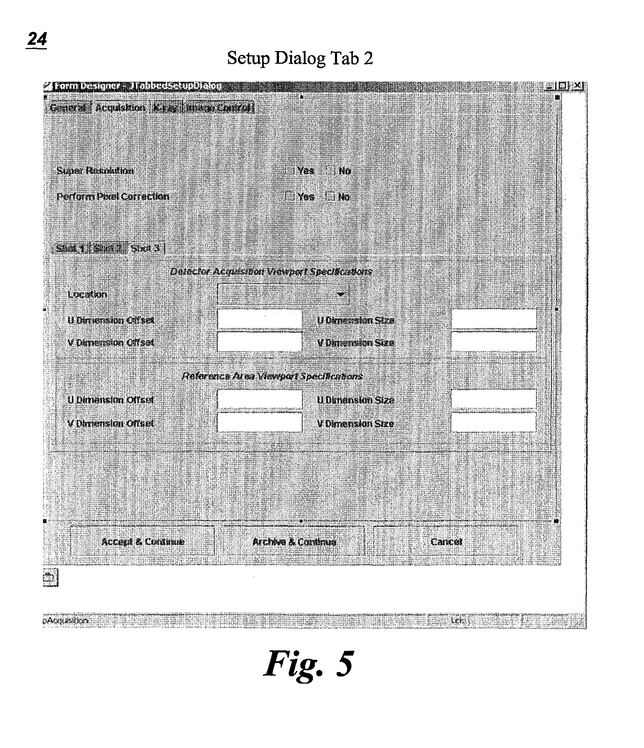

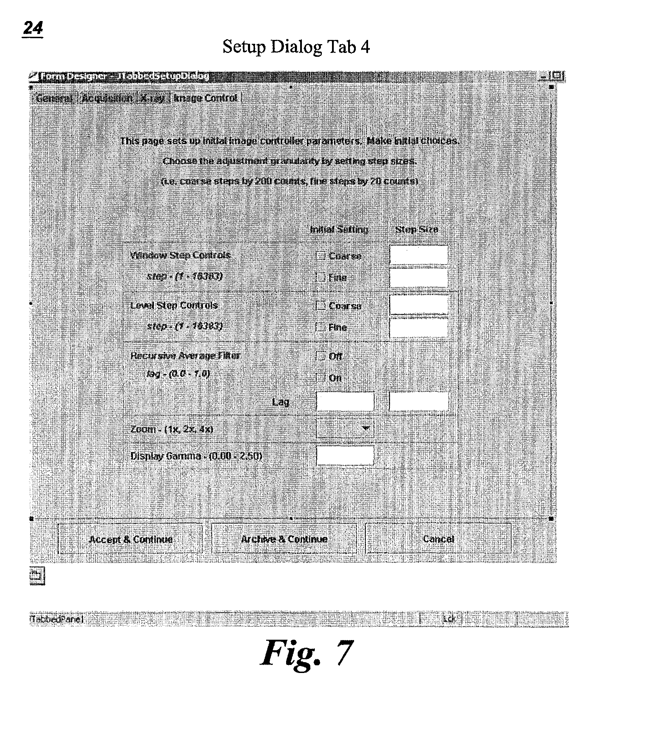

If the operator selects an existing technique 20, the operator may elect to use the technique 20 in its current form or to modify the existing technique 20. A technique 20 may be modified, for example, by changing at least one of the inspection parameter values 22. For example, in user screen 12 (which is shown in FIG. 2), the operator selects an existing technique 20 for digital radiography. For the example illustrated by FIGS. 2-7, the operator clicks the continue button 18 and is presented with a user screen 14 (FIG. 3), where the part identifier is entered for the selected technique 20. The operator clicks the continue button 46 on user screen 14 and is presented with the exemplary user screen 24 for the selected technique 20. Exemplary user screens 24 for setting up the technique 20 are shown in FIGS. 4-7, for this digital radiography example. For this example, the inspection system 40 is a digital radiography inspection system. Also, for this example, the techniques 20 are added or modified using technique setup software located within a Data Acquisition Control program (not shown). These screens 24 are purely exemplary and one skilled in the art will recognize that the format, order, and organization can be changed without departing from the scope of the invention. The user screen 24 may be divided into a number of tabs 26, as shown in FIGS. 4-7.

Other possible formats include one large user screen 24 that includes all of the data fields 28 in the tabs 26 and a series of user screens 24 that contain all of the data fields 28. Although not shown in FIGS. 4-7, where the operator has selected an existing technique 20, the data fields 28 are typically populated. For example, the data fields 28 may be populated with the inspection parameter values 22 that were previously used, with default values of the inspection parameter values 22, or with combinations thereof. For the exemplary user screen 24 of FIGS. 4-7, the operator reviews the inspection parameter values 22 in the data fields 28 and changes the values 22 as desired. To enter the changes for this example, the operator clicks on the Accept & Continue button 32, thereby modifying the existing technique 20. In the event the operator makes an error or otherwise wishes to go back, the operator may click on the Cancel button 34.

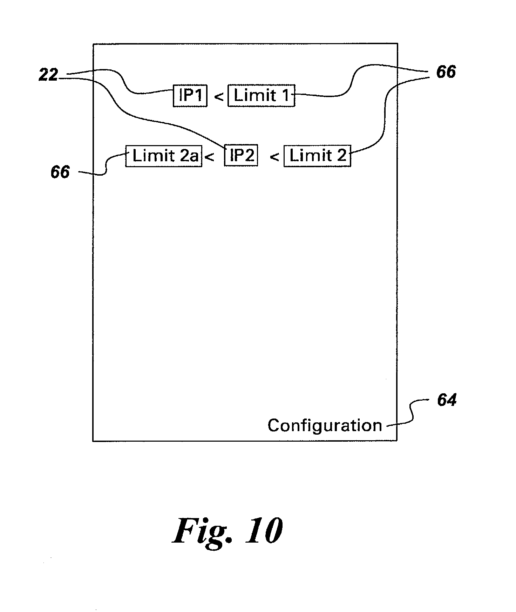

According to a more particular embodiment, the technique 20 is error checked before the technique 20 is formatted. More particularly, the technique 20 is error checked after the existing technique 20 has been modified and before the technique 20 has been formatted. In an exemplary radiography embodiment, at least one configuration 64 is provided (file w/ limits for the source) for each x-ray source (not shown). A "configuration" is a file that includes a number of limits 66 on the inspection parameter values 22. FIG. 10 is a conceptual depiction of a configuration with exemplary inspection parameters 22 IP1 and IP2 with corresponding limits 66 LIMIT 1 and LIMITS 2a and 2b. For the exemplary radiography example, the configuration 64 includes limits on the operating voltage, operating current, focal spot size, and exposure time for the selected x-ray source. The limits 66 on the inspection parameter values may be upper limits, lower limits, or both upper and lower limits, depending on the inspection parameter. The inspection parameter values 22 in the technique are compared with the limits 66 for the respective inspection parameter values 22. The comparison may be performed using software, which accesses the respective configuration 64 and technique 20. If any of the inspection parameter values 22 are outside their limits 66, the software prompts the user to select an inspection parameter value 22 within the limit(s) 66, and the respective inspection parameter value is replaced with the acceptable value. The software may also treat a blank field as an erroneous value, prompt the user to enter an inspection parameter value that is within the acceptable limits 66, and populate the field with the newly entered, acceptable inspection parameter value. The software may also further check fields 28 populated with alphanumeric characters, for example the technique name 38, to ensure that the field 28 is populated with appropriate characters and prompt the operator to correct if necessary. Exemplary characters may be all alpha characters, numbers, and the underscore symbol, for example.

According to one embodiment, the technique 20 is archived. More particularly, the modified technique 20 is archived after the error check is performed. For example, the modified technique 20 can be archived by adding it to the database 10. Using the exemplary user screens of FIG. 4-7, the operator archives the modified technique 20 by clicking on the Archive & Continue button 36.

As discussed above, in addition to selecting an existing technique, the operator may also elect to create a new technique by selecting a new technique, for example using the user screen 12 of FIG. 2. When a new technique is selected, the inspection method also includes specifying the inspection parameter values 22 for the new technique 20. For example, after selecting a new digital x-ray inspection technique 20 in user screen 12 of FIG. 1, the operator is presented with the user screen 24 of FIGS. 4-7, for the digital radiography inspection example discussed above. The data fields 28 may be empty, as shown for example in FIGS. 4-7 or may be auto-populated. For this latter auto-populated example, the new technique initially includes a number of auto-populated inspection parameter values 22. To specify the inspection parameter values 22, the operator reviews and revises the auto-populated inspection parameter values 22. To revise the values 22 for this example, the operator enters the new values 22 in the respective data fields 28 and clicks on the Accept & Continue button 32, thereby entering the new values 22 into the new technique 20. In the event the operator makes an error or otherwise wishes to go back, the operator may click on the Cancel button 34.

According to a more particular embodiment, the new technique 20 is error checked before the new technique 20 is formatted. More particularly, the new technique 20 is archived after performing the error check. As noted above, the new technique 20 can be archived by adding it to the database 10. Using the exemplary user screens of FIG. 4-7, the operator archives the new technique 20 by clicking on the Archive & Continue button 36.

In an exemplary embodiment, if the operator selects a new technique, the inspection parameter values 22 stored in the prior technique 20 become the default entries in the new technique 20. The user screen 24 then presents the operator with all of the information in the prior technique 20 in an easily selectable manner, for example in user screens 24 like those shown in FIGS. 4-7. The operator then modifies any or all of the data fields 28. The new technique 20 is error checked, to check all inspection parameter values 22 for correctness. Incomplete or incorrect values 22 prompt the operator with a message (not shown) to correct the information. After error checking the new technique 20, the operator may save the new technique 20 in the database 10 using the existing record or as a new record with a new technique name 38.

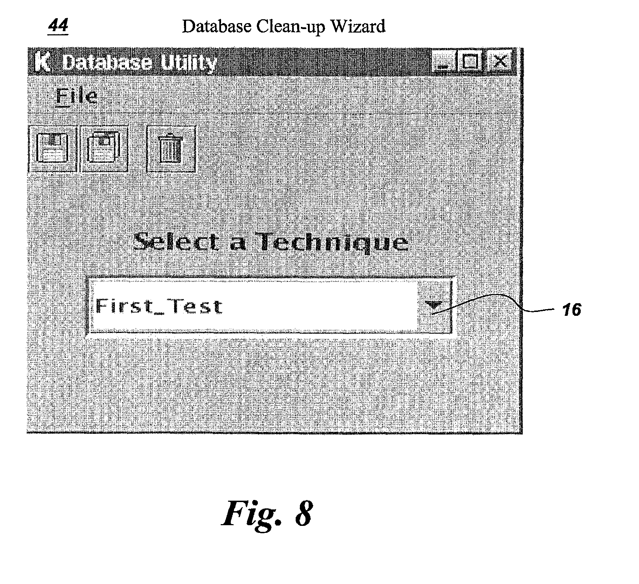

In another example, the techniques 20 in the database 10 may be accessed through a database clean-up utility. As shown for example in Figure 8, a database clean-up utility wizard 44 presents a list of database techniques 20 to the operator. For the user screen of Figure 8, the operator accesses this list using the pull down menu button 16. Using the list of techniques 20, the operator has the following options: print all of the inspection parameter values 22 from a technique 20 to a file (not shown), print all of the inspection parameter values 22 from all of the techniques 20 to a respective number of associated files (not shown), and/or delete a technique 20 from the database 10. Deleting unnecessary techniques 20 from the database 10 is desirable to prevent the database 10 from becoming too large and cluttered.

A digital radiography inspection method embodiment of the invention is also described with respect to FIG. 1. The digital radiography inspection method includes accessing a database 10. The database 10 includes at least one technique 20, and the technique 20 has a number of inspection parameter values 22. The digital radiography inspection method further includes selecting one of the techniques 20, error checking the technique 20, formatting the technique 20 into a variable list 30 readable by a digital radiography inspection system 40, and outputting the variable list 30 to an instruction file 50 accessible by the digital radiography inspection system 40. As noted above, either a new or an existing technique 20 may be selected. The digital radiography inspection method further includes operating the digital radiography inspection system 40 using the variable list 30 to generate a set of inspection data 42.

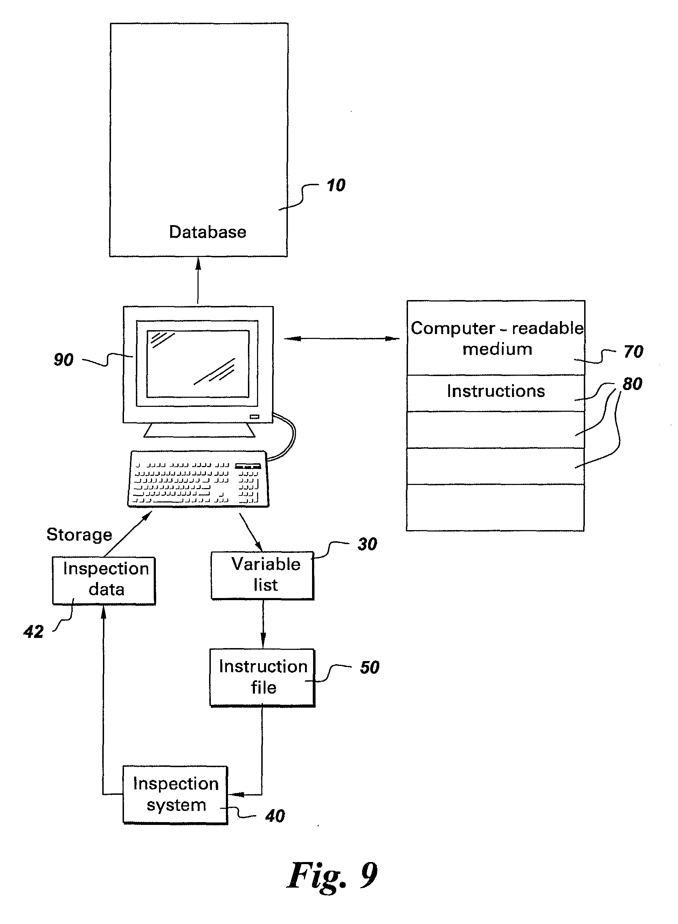

A computer-readable medium 70 embodiment of the invention is described with reference to FIG. 9. The computer-readable medium 70 is configured to store and/or transmit instructions 80 that, when executed by computer 90, perform a method for outputting a variable list 30 to an instruction file 50 accessible by an inspection system 40. One exemplary inspection system 40 is a digital radiography inspection system. The method includes accessing the database 10, selecting one of the techniques 20 in the database, error checking the technique 20, formatting the technique 20 into the variable list 30 readable by the inspection system, and outputting the variable list 30 to the instruction file 50 accessible by the inspection system 40. It should be noted that the phrase "configured to" as used here means that the computer-readable medium 70 is equipped with software that stores and/or transmits instructions 80, as will be understood by those skilled in the art.

## Claims

1. An inspection method comprising:
accessing a database (10), the database comprising at least one technique (20), the technique comprising a plurality of inspection parameter values (22);
selecting one of the techniques;
formatting the technique into a variable list (30) readable by an inspection system (40); and
outputting the variable list to an instruction file (50) accessible by the inspection system.

2. The inspection method of Claim 1 further comprising error checking the technique (20) prior to said formatting of the technique.

3. The inspection method of Claim 1, wherein said selection comprises selecting an existing technique (20), said method further comprising:
modifying the existing technique, said modification including modifying at least one of the inspection parameter values (22);
error checking the technique after said modification and prior to said formatting of the technique; and
archiving the technique after said error check.

4. The inspection method of Claim 1, wherein said selection comprises selecting a new technique (20), said method further comprising:
specifying the inspection parameter values (22) for the new technique;
auto-populating the new technique, the new technique initially comprising a plurality of auto-populated inspection parameter values, wherein said specification of the inspection parameter values comprises reviewing and revising the auto-populated inspection parameter values;
error checking the new technique prior to said formatting of the new technique; and
archiving the new technique after said error check.

5. The inspection method of Claim 1, further comprising:
generating a report (60) of the inspection parameter values (22) for the technique (20); and
operating the inspection system (40) using the variable list (30) to generate a set of inspection data (42).

6. A digital radiography inspection method comprising:
accessing a database (10), the database comprising at least one technique (20), the technique comprising a plurality of inspection parameter values (22);
selecting one of the techniques;
error checking the technique;
formatting the technique into a variable list (30) readable by a digital radiography inspection system (40); and
outputting the variable list to an instruction file (50) accessible by the digital radiography inspection system.

7. The digital radiography inspection method of Claim 6, wherein said selection comprises selecting an existing technique (20), said digital radiography inspection method further comprising:
modifying the existing technique, said modification including modifying at least one of the inspection parameter values (22); and
archiving the technique (20) after said error check.

8. The digital radiography inspection method of Claim 6, wherein said selection comprises selecting a new technique (20), said method further comprising:
specifying the inspection parameter values (22) for the new technique;
auto-populating the new technique, the new technique initially comprising a plurality of auto-populated inspection parameter values (22), wherein said specification of the inspection parameter values comprises reviewing and revising the auto-populated inspection parameter values; and
archiving the new technique after said error check.

9. The digital radiography inspection method of Claim 6, further comprising:
generating a report (60) of the inspection parameter values (22) for the technique (20); and
operating the digital radiography inspection system (40) using the variable list (30) to generate a set of inspection data (42).

10. A computer-readable medium (70) storing and/or transmitting instructions (80) that, when executed by a computer (90), perform a method for outputting a variable list (30) to an instruction file (50) accessible by an inspection system (40), the method comprising:
accessing a database (10), the database comprising at least one technique (20), the technique comprising a plurality of inspection parameter values(22);
selecting one of the techniques;
error checking the technique;
formatting the technique into the variable list readable by the inspection system; and
outputting the variable list to the instruction file accessible by the inspection system.
